# EUROPEAN PATENT SPECIFICATION

(11) **EP 3 427 238 B1**
(45) Date of publication and mention of the grant of the patent: **07.12.2022**
(21) Application number: 17719320.8
(22) Date of filing: 07.03.2017
(51) Int. Cl.: G07F 17/00, B65B 3/00, A61J 1/20

(54) **MACHINE AND PROCESS FOR PREPARING INTRAVENOUS MEDICAMENTS**
MASCHINE UND VERFAHREN ZUR HERSTELLUNG INTRAVENÖSER MEDIKAMENTE
MACHINE ET PROCÉDÉ DE PRÉPARATION DE MÉDICAMENTS INTRAVEINEUX

(30) Priority: 07.03.2016 IT UA20161408
(43) Date of publication of application: 16.01.2019
(73) Proprietor: Swisslog Italia S.p.A., 20124 Milano (MI) (IT)
(72) Inventor: ESTE, Flavio, 35030 Selvazzano Dentro (PD) (IT); MINISINI, Michele, 20124 Milano (IT)
(74) Representative: Provvisionato, Paolo
(86) International application number: PCT/IB2017/051316
(87) International publication number: WO 2017/153905

(56) References cited:
- US-A- 6 006 946
- US-A1- 2011 208 350
- US-A1- 2014 202 588

## Description

### Field of the invention

The present invention relates to a machine and a process for preparing intravenous medicaments.

### Technological background

There are known machines for preparing intravenous medicaments. The intravenous medicaments are prepared by mixing specific quantities of base products. In many cases, the resulting intravenous medicaments are stored in suitable containers, such as bottles, syringes, bags or elastomer materials and the like. The base products are contained in phials, bottles, bags and the like. During the preparation, a predetermined quantity of base product is removed from the relevant container. The removal of the base product from the relevant container is almost always carried out by means of a syringe.

In many hospitals, the preparation of intravenous medicaments is still carried out manually, even though machines for the automatic or semi-automatic preparation of those intravenous medicaments have become widespread and allow an improvement of the precision, an increase in productivity and ensure greater safety for the operators, especially in the case of handling toxic substances such as cytotoxic medical products and the like. The various containers used for the preparation of intravenous medicaments, such as bottles of base products, syringes for extraction of the base products and storage of the ready intravenous medicaments, bags, phials and the like, are introduced into machines of known type which provide for mixing of the base products so as to produce the required admixture of base products, in the correct doses and in the correct order.

US2011208350 describes an Automated Pharmacy Admixture System including a manipulator system to transport medical containers such as bags, vials, or syringes in a compounding chamber regulated to a pressure below atmospheric pressure.

US2014202588 describes a further machine for the automatic preparation of an intravenous medication is provided. In one implementation the machine has a chamber with a starting products area, a transfer tools area where at least one transfer tool that is used to prepare the required medication is disposed, a prepared products area, and a first robot to handle the transfer tool.

US6006946 describes a pill dispensing system with a shelving unit that holds a number of bulk containers, each holding a bulk amount of a pill to be dispensed. A computer controlled robot is computer controlled to retrieve an empty pill bottle, fill and label it.

The machines of known type are available in many forms and variants, which are not completely satisfactory. Some of them are bulky, others are expensive, or some machines provide a productivity level which is relatively low and difficult to scale in order to satisfy increased production requirements. Other machines are subject to potential errors during metering, while others are difficult to clean and sterilize. Still other machines do not ensure an adequate level of protection for the operators.

### Statement of invention

An object of the present invention is to provide a machine for preparing intravenous medicaments of an improved type with respect to the machines of known type. In particular, an object of the invention is to provide a machine which is safe, precise and relatively economical, but which can ensure good productivity. Furthermore, an object of the invention is to provide a machine whose productivity performance levels can be increased where applicable, without increasing the spatial requirement of the machine and at a fraction of the cost of the basic machine. Another object is to provide a machine which is simple to use, easy to clean, economical to use and to maintain, and safe for the operators. Another object of the invention is to provide a process which is particularly effective, rapid and safe for preparing an intravenous medicament by using a machine according to the invention.

Another object of the invention is to provide a metering module which is particularly effective for preparing intravenous medicaments to be used both per se, for example, in a state inserted in a laminar flow cabinet for use by an operator, and as a component of a more complex machine for preparing intravenous medicaments.

For the purpose of achieving the objects indicated above, the invention relates to a machine and a process for preparing intravenous medicaments having the features indicated in the appended claims.

According to a first aspect, a machine for preparing intravenous medicaments comprises an enclosing structure having a plurality of lateral walls which define the sides of a closed internal working environment. At least one access station is provided on at least one lateral wall of the enclosing structure for the selective access to the closed internal working environment, in which there are provided a plurality of stations for one or more objects which can be used in the preparation of intravenous medicaments. The plurality of stations comprise at least one temporary receiving or parking station which is provided for temporarily receiving one or more of the objects, and at least one operating station which is provided for carrying out operations on one or more of the objects for preparing intravenous medicaments. There is provided on at least one of the lateral walls, which thereby becomes an equipped wall, at least one temporary receiving or parking station and/or at least one operating station. The machine further comprises a handling robot which is arranged in the closed internal space of the machine. The handling robot is programmed to transfer the objects from any station which is selected from at least one access station, at least one temporary receiving station and at least one operating station, to any other of those stations. There is provided in a substantially central zone of the at least one equipped wall a preparation station as defined by claim 1.

Preferably, the handling robot is arranged in a substantially central position in the closed internal working environment. The handling robot comprises a handling hand and can rotate about a substantially vertical axis so as to be able substantially to reach with the handling hand any position on the lateral walls of the enclosing structure.

According to a particular aspect, the at least one equipped wall of the machine comprises:
- at least one bottle parking station for bottles or the like,
- at least one ampoule parking station for ampoules or phials or the like,
- at least one syringe parking station for syringes or the like,
- at least one bag parking station for bags or the like.

Preferably, bottle work supports are arranged around the preparation station.

Preferably, there is arranged below the preparation station a weighing device which is capable of weighing a bag and/or a bottle.

According to a particular aspect, the syringe support can rotate about an axis which is substantially horizontal and movable in a substantially vertical direction

There are preferably arranged on the at least one equipped wall one or more mixers which are capable of mixing the contents of one or more corresponding bottles.

The access station is preferably constructed in the form of a transit chamber which is constructed so as not to directly expose to the exterior the environment internal with respect to the machine.

Even more preferably, the transit chamber has two closure panels or doors, one directed towards the outer side of the enclosing structure so as to be accessible to an operator in order to introduce or withdraw contents to/from the transit chamber, and the other directed towards the internal working environment of the machine for removing or depositing contents by the handling robot.

According to another particular aspect, there can be inserted in the access station at least one tray which is provided with specific receiving members for the objects which are suitable for preparing the intravenous medicaments.

Preferably, the at least one tray comprises at least one receiving member which comprises a cavity with at least two mutually different internal diameters so as to be able to receive cylindrical objects with corresponding different basic diameters which substantially correspond to the different internal diameters of the cavity.

Even more preferably, the at least one tray further has at least one specific receiving member for syringes or the like.

According to another aspect, the machine is provided with a system for regulating the air inside the enclosing structure in order to maintain environmental conditions which are ideal for preparing the intravenous medicaments. The regulating system can place the interior of the machine at reduced pressure with respect to the external environment, thereby preventing discharges of powders or other products which are dangerous to the health of the operators. Alternatively, the regulating system can place the interior of the machine at excess pressure with respect to the external environment in order to prevent the introduction of contaminants into the machine.

Preferably, the internal working environment is maintained at a negative pressure in order to prevent the discharge of noxious or toxic products being processed therein.

According to another aspect, there is described a process for preparing intravenous medicaments by means of a machine of the above-indicated type, wherein there is provision for the following steps to be carried out asynchronously:
- introduction of containers inside the machine;
- removal of containers from the machine;
- transfer of containers from a predetermined station to another predetermined station, which is carried out by the single handling robot;
- subjecting the containers to operations for preparing intravenous medicaments which are carried out without the use of the handling robot.

Other characteristics and advantages will be appreciated from the following detailed description of a preferred embodiment, given by way of non-limiting example with reference to the appended Figures, in which:
- Figure 1 is a perspective view from the exterior of a first version of a machine according to the invention,
- Figure 2 is a plan view of the interior of the machine of Figure 1,
- Figure 3 is a perspective view of the internal mechanisms of the machine of Figure 1, including a preparation group and a handling robot,
- Figure 4 is a perspective view of the single preparation group of the machine of Figure 1,
- Figure 5 is a perspective view, drawn to an enlarged scale, of the access opening of the machine of Figure 1;
- Figure 6 is a plan view, similar to Figure 2, of the interior of a second version of a machine according to the invention,
- Figure 7 is a perspective view of the internal mechanisms of the machine of Figure 6, including two preparation groups and a common handling robot,
- Figure 8 is a plan view, similar to Figures 2 and 6, of the interior of a third version of a machine according to the invention,
- Figure 9 is a perspective view of a metering module,
- Figure 10 is a front view of the metering module in accordance with the arrow X of Figure 9,
- Figure 11 is a perspective view of a container support group of the metering module of Figures 9 and 10,
- Figure 12 is a view according to a different perspective of the container support group of Figure 11,
- Figure 13 is a perspective view of a syringe support group/metering member of the metering module,
- Figure 14 is a front view of the syringe support group/metering member in accordance with the arrow XIV of Figure 13,
- Figure 15 is a cross-sectional view of the syringe support group/metering member of Figures 13 and 14,
- Figure 16 is a view from above of the syringe support group/metering member of Figures 13, 14 and 15,
   Figure 17 is a perspective view of a needle unscrewing and/or syringe plugging group of the metering module,
- Figure 18 is a view according to a different perspective of the needle unscrewing and/or syringe plugging group of Figure 17,
- Figure 19 is an elevation view of the needle unscrewing and/or syringe plugging group of Figures 17 and 18,
- Figures 20 and 21 are two views in accordance with different perspectives of a syringe weighing group of the metering module,
- Figure 22 is a perspective view of a bag weighing group, and
- Figure 23 is an elevation view of the bag weighing group in accordance with the arrow XXIII of Figure 22.

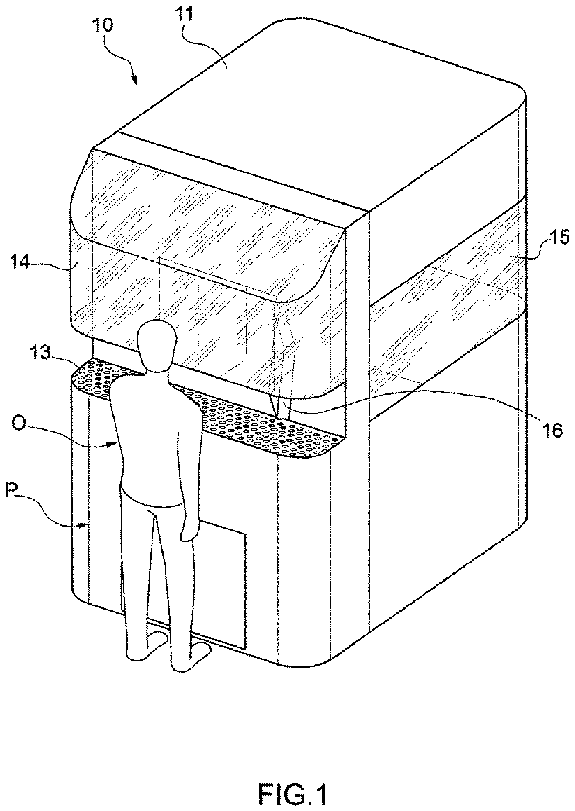

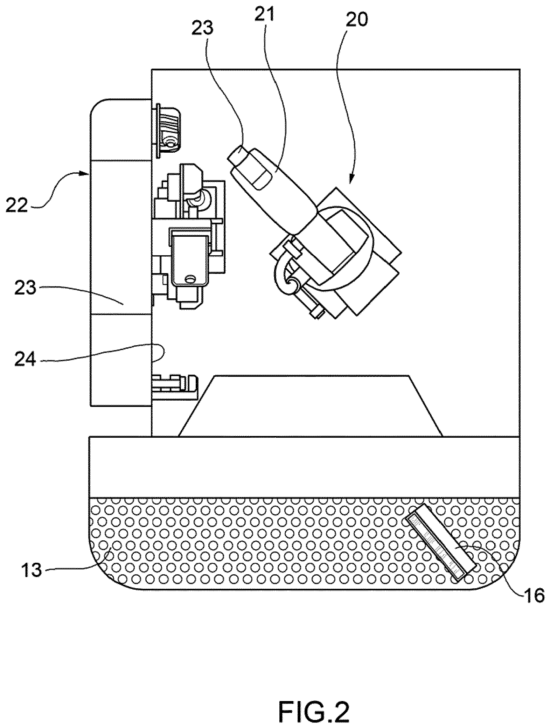

With reference now to Figures 1 to 5, a machine 10 for preparing intravenous medicaments comprises an external enclosure 11 with an access 12 in the region of a work station P. The access 12 allows at least one operator O to introduce and withdraw products to/from a working environment which is defined inside the external enclosure 11. A support plane 13 is positioned in front of the access 12. A laminar flow cabinet 14 protects the access and covers the support plane 13. Preferably, the external enclosure 11 is provided with a transparent portion 15 for inspection of the interior of the machine 10. In the region of the work station P there is provided at least one data input and/or display device 16, such as a touch screen, a bar code reader or the like, or other known devices of the type. The access 12 is constructed in the form of a transit chamber which does not ever directly expose to the exterior the internal environment with respect to the machine. In particular, the transit chamber may have two closure panels or doors, one directed towards the outer side accessible to the operator in order to introduce or withdraw content to/from the transit chamber, and the other which is directed towards the inner side of the machine and which can be opened automatically for removing or depositing content by the equipment of the machine, as will become clearer below. The two closure panels or doors of the transit chamber are controlled so as not to be both open at the same time: before allowing the opening of one of the two panels, the electronic control system of the machine establishes that the other panel is effectively closed.

Preferably, the machine 10 is provided with an air regulation system inside the enclosure 11, which system may comprise air recirculation, filtering of the air being drawn in and discharged and optional conditioning of the air. The regulation of the air inside the enclosure 11 allows ideal environmental conditions to be maintained for preparing the intravenous medicaments, at the same time avoiding discharges of powders or other products which are dangerous to the health of the operators, and minimizing the introduction of contaminants in the enclosure 11. Preferably, during operation, the interior of the machine 10 is maintained at a negative pressure in order to prevent the discharge of noxious or toxic products being processed therein. In a variant, the pressure inside the machine 10 is maintained at a positive pressure with respect to the external environment so as to prevent the introduction of contaminants inside the machine 10. In a variant, the machine is capable of modifying the individual internal pressure in such a manner that it can be alternatively in an excess pressure or reduced pressure state. It is preferable for the interior of the machine 10 to be maintained at reduced pressure when toxic active ingredients are being used, such as cytostatic agents, and therefore the discharge of any substances is considered to be a risk. Conversely, the machine can be operated at excess pressure for medicaments which are non-toxic, such as heparin, in which case the contamination by any external pathogens is considered to be a greater risk than a possible discharge of the active ingredient to the external environment.

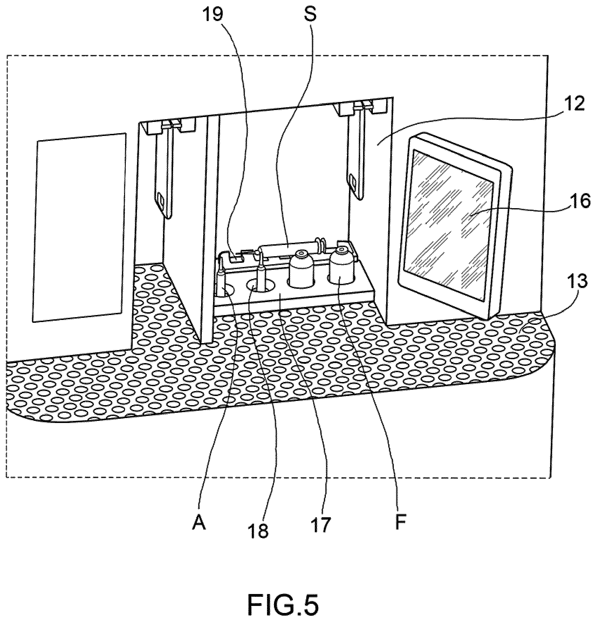

With reference to Figure 5, the access 12 particularly allows introduction inside and withdrawal from the machine 10 of one or more trays 17 which are provided with specific receiving members 18 for objects which are suitable for preparing the intravenous medicaments, including bottles F or the like, ampoules A or the like. In particular, the receiving members 18 for bottles F and ampoules A are each constructed to have a cavity in the tray 17 having two different diameters so as to produce a step so as to be able to receive both cylindrical bottles F having a base diameter substantially corresponding to the greater diameter of the cavity of the receiving member 18 and thinner ampoules A having a smaller diameter substantially corresponding to the smaller diameter of the cavity of the receiving member 18. Naturally, this solution is not limited to the arrangement of only two different diameters of the receiving members 18, but instead may be generalized by producing steps with a plurality of mutually different diameters so as to be able to adapt to as many different diameters of bottles F and/or ampoules A and/or other receiving members. The trays 17 also have specific receiving members 19 for syringes S or the like, which are used during the preparation of the intravenous medicaments. Figure 5 shows by way of non-limiting example a tray 17 which has four aligned receiving members 18 and a receiving member 19 for a syringe S. The predetermined number of objects which can be arranged on the tray 17 makes it simple to handle the products to be used and it is not necessary to have vision systems for recognizing what has been introduced into the machine 10 via the tray 17 by the operator O.

Inside the external enclosure 11, in a substantially central position in the working environment, there is provided a handling robot 20. The handling robot 20 can rotate about a vertical axis and has articulated arms 21 which terminate in a handling hand 23 which can reach any position on the walls which delimit the working environment, in particular in order to move the bottles F, the ampoules A, the syringes S and one or more bags B for collecting the intravenous medicaments, as will become clearer below.

The example of Figures 1 to 5 illustrates a first embodiment of the machine 10, in which the internal working environment comprises an equipped side 22 which groups together the machinery which is provided for preparing the intravenous medicaments. The equipped side 22 comprises a box-like structure 23, in which specific movement mechanisms and the electronic actuation system are arranged. The box-like structure 23 has an equipped internal wall 24, from which the pieces of equipment of the machinery provided for preparing the intravenous medicaments project.

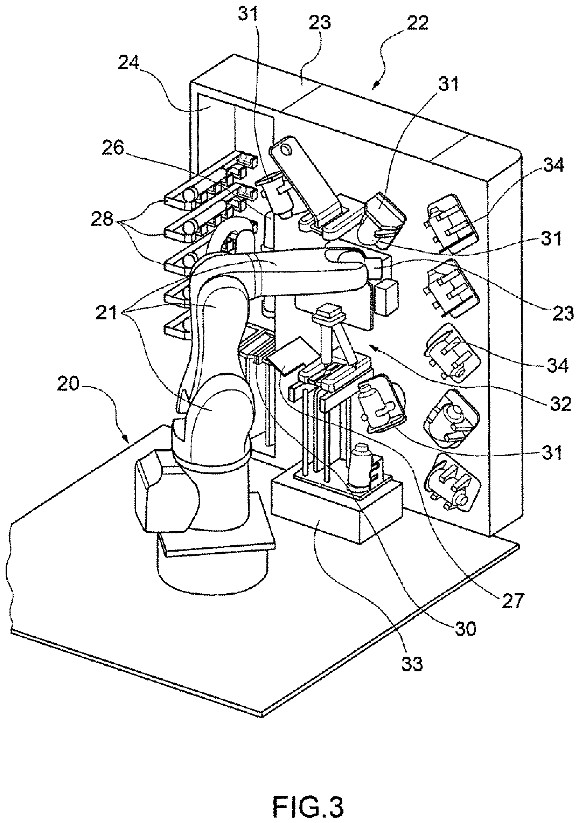

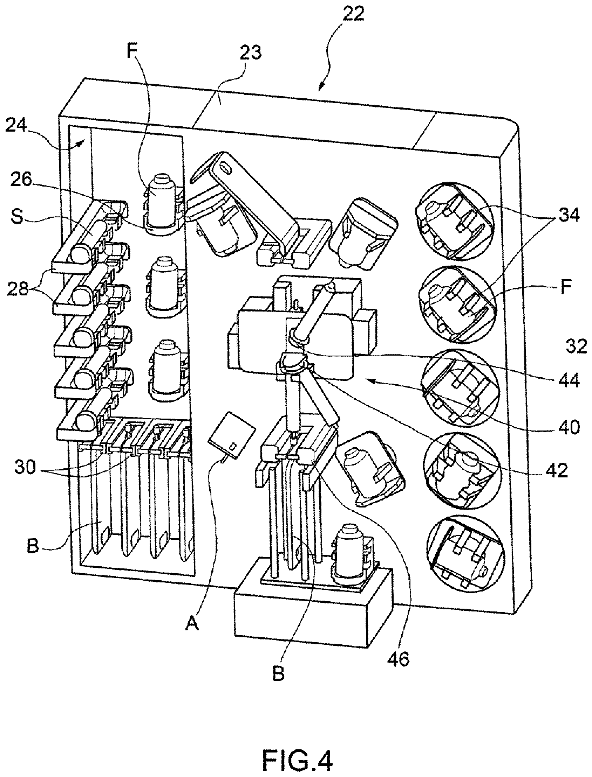

As can better be seen in Figures 3 and 4, the equipped wall 24 comprises at least one bottle parking station 26 for bottles F or the like. The equipped wall 24 comprises at least one ampoule parking station 27 for ampoules or phials A or the like. The equipped wall 24 comprises at least one syringe parking station 28 for syringes S or the like. The equipped wall 24 comprises at least one bag parking station 30 for bags B or the like.

In a substantially central zone of the equipped wall 24 there is arranged a preparation station 32 which is suitable for using intravenous medicaments, as will be described more clearly below. Bottle work supports 31 are arranged around the preparation station 32. There is positioned below the preparation station 32 a weighing device 33 which is capable of weighing a bag B and/or a bottle F. There are provided on the equipped face 24 mixers 34 which are capable of mixing the contents of the bottles F. In the embodiment illustrated in Figures 3 and 4, by way of example which must not be considered to limit the present invention, the equipped wall 22 comprises three bottle parking stations 26, five syringe parking stations 28, four bag parking stations 30, five mixing members 34 and three bottle work supports 31 which are arranged around the single preparation station 32.

As can better be seen in Figure 4, the preparation station 32 comprises a syringe support 40 which is rotatable about a horizontal axis and which is movable in a vertical direction, and which is provided with an engaging member 42 which is preferably a pair of pincers which is capable of selectively gripping the body of a syringe S. The syringe support 40 also comprises a syringe actuator 44 which is capable of selectively moving the plunger of a syringe S gripped by the engaging member 42 forwards or backwards so as to operate the syringe S so as to draw in or inject. The movement of the syringe support 40 in rotation and in a vertical direction allows a syringe S which is held by the engaging member 42 to be moved away from and towards the opening of a bag B which is arranged on a bag work support 46, or away from and towards the opening of a bottle F which is retained on one of the bottle work supports 31.

The ampoule A, after being loaded on the machine, is transported into the working area or into the storage area. The device 27 provides for keeping the ampoule A gripped so as to allow the robot, by means of the pair of pincers with which it is provided, to break the upper nozzle of the ampoule A. After the ampoule A has been opened in this manner, the contents thereof can be readily drawn in by means of a syringe.

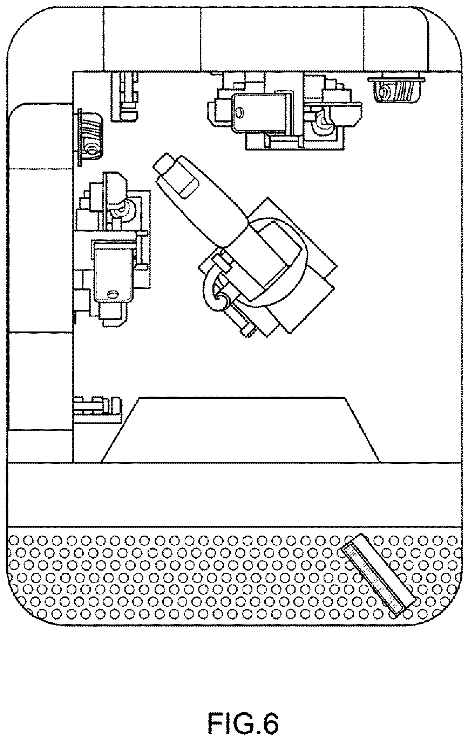

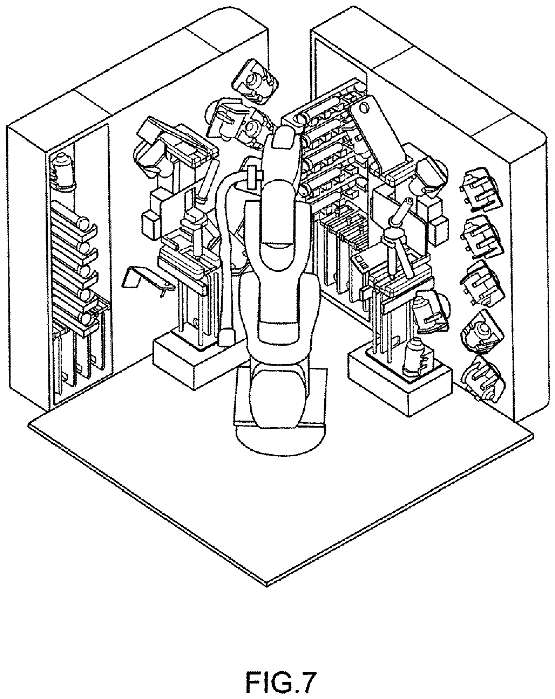

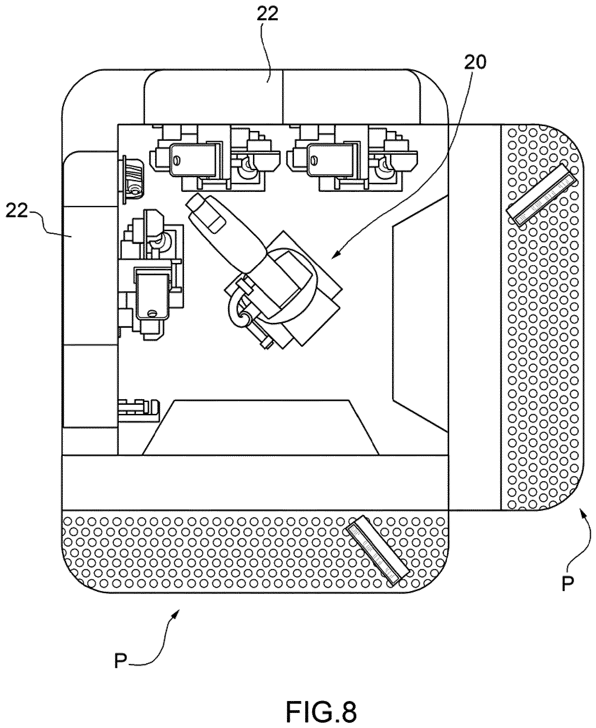

Figures 6 and 7 illustrate a variant of the machine 10, which is provided with two equipped sides 22 of the type described above, which are served by a single handling robot 20 which is arranged at the centre of the machine 10. This version allows the productivity of the machine 10 to be doubled with costs and dimensions which are substantially less than double those of the entire machine. The machine may provide for a single work station P, as illustrated in Figure 1, or may be modified with the provision of a second work station P on another side of the machine so as to operationally use all four sides of the machine, two for operator stations P, two for equipped sides 22, as can be seen in Figure 8. Naturally, it is also possible to configure the machine 10 with a single work station P and three equipped sides 22. The plan geometry of the machine 10 is not further limited to the quadrilateral form, it being possible to construct a machine 10 with five or more sides, of which some are used operationally by equipped sides 22 and others by work stations for operators. Those variants have in common the modularity of the equipped sides 22 and the work stations P which are identical to each other and which can be increased in number in order to correspondingly increase the productivity of the machine 10, with costs and dimensions which are reduced as a result of the use of a single handling robot 20.

For preparing intravenous medicaments, an operator O present in the work station P is dedicated to introducing into the machine 10 through the access 12 desired products. The process for preparing intravenous medicaments may be carried out in accordance with various methods, depending on how the basic components are arranged and how it is desired to supply the finished product. The most common operations provide for the charging of bottles or bags, which may contain active ingredients or diluents, and the discharge, that is to say, the supply of the intravenous medicament ready for use, in bottles, bags or syringes. There will be described below some operations which can be carried out by means of the machine of the present invention without the number or the sequence of operations indicated being limiting for the processes which can be carried out with programming of the machine in accordance with specific requirements. In fact, as a person skilled in the art may understand from a reading of the present description, the machine of the present invention is particularly flexible and the operations which the machine may carry out are of various types and are not limited to the ones which have been described here.

In particular, the operator O positions one or more bottles F and/or ampoules A on a tray 17 which is arranged in the transit chamber of the access 12 to the opening of the external door thereof. The identification of the products positioned on the tray 17 is carried out by the operator, for example, with input of the identification data of the products in the administration system of the machine 10 via the data input device 16. After the tray 17 has been positioned inside the transit chamber of the opening 12, the external door is closed and the opening of the internal door is authorized so that the handling robot 20 inside the machine 10 can reach the products placed on the tray 17. The handling robot 20 then provides for a transfer of the bottles F and/or ampoules A from the tray 17 to respective bottle parking stations 26 or ampoule parking stations 27. The handling robot 20 also provides for the transfer of the optional syringe S which is positioned on the tray 17 to a respective syringe positioning station 28. Preferably, the bottles F are weighed on the balance 33 before being transferred to the respective bottle parking positions 26. In this case, the handling robot 20 provides, preferably during the weighing of each bottle F, for the removal of other objects from the tray 17 or in any case for other transfer operations of other objects in accordance with methods which will be discussed below. After the bottle F has been weighed, the handling robot 20 provides for the transfer thereof from the balance 33 to a parking position 26, that is to say, if the processing station 32 is ready for use, directly on one of the bottle work supports 31.

The operator may also introduce into the opening 12 one or more bags B which, once introduced into the machine 10, are removed by the handling robot 20 and transferred to a corresponding bag parking position 30. It should be noted that the handling robot 20 is occupied with these operations only for the time necessary for transferring the objects. Furthermore, the transfer of the objects to the respective parking positions does not necessarily have to be carried out when the products are introduced into the machine 10, but may instead be postponed, even in a differentiated manner for each product present on a single tray 17, in accordance with the working cycles in progress inside the machine 10, in accordance with an optimized and asynchronous control logic with respect to the preparation operations for the intravenous medicaments, which will be explained herein below.

The actual preparation of the intravenous medicaments is carried out by means of operations carried out by the preparation station 32. In this regard, one of the syringes S is taken from the parking position 28 by the handling robot 20 and carried to the syringe support 40 of the preparation station 32, where the engaging member 42 grips it. The handling robot 20 further provides for a bottle F to be taken from the parking position 26 thereof and to be transferred to one of the bottle work supports 31. One of the bags B is also taken from the parking position 30 thereof and carried to the operating position, on the operating support positioned below the syringe support 40.

The ampoules A are stored on a parking support which is provided in the area 24. The ampoules A can be transported from that support towards the system 27 where an automatic position holding system is provided. The robot, by means of a movement of the pair of pincers with which it is provided, brings about the breakage of the nozzle of the ampoule A, which is thereby ready for the contents thereof to be drawn out by a syringe. The broken nozzle is transported by the robot towards the discharge.

When a syringe is placed and retained in the preparation station 32, the syringe support 40 is orientated and moved in such a manner that the needle of the syringe can be introduced into the stopper of a bottle F in order to remove therefrom dilution liquid to be transferred to an ampoule, or to inject therein, for example, an active ingredient to be diluted.

Once the product to be diluted has been injected in one of the bottles F positioned on one of the bottle operating supports 31, the handling robot 20 provides for the bottle F to be taken in order to transfer it to one of the mixers 34, which is directed in order to mix the contents of the bottle F. In accordance with the specific configuration of the mixer 34, the mixer can be activated so as to rotate continuously at a predetermined number of revolutions, or with alternating rotation in two directions, or in an oscillating manner, at constant or unequal speeds, in accordance with the profile settings for mixing which may also be specific in accordance with the product to be mixed.

At the end of the mixing operation, the bottle F can be transferred again to a bottle operating support 31 in order to remove therefrom the contents to be injected into a bag B, or it may be moved to a bottle parking position 26, or it may be transported towards the opening 12. All those movements are carried out by the handling robot 20, which is also used for other movements of objects, such as, for example, the transfer of a syringe S from the syringe support 40 in order to transfer it into a disposal zone (not illustrated in the Figures), for example, into a container for hospital waste which is positioned inside the machine 10 and which is periodically emptied by an operator.

It should be noted how, in all the cases mentioned above, the handling robot 20 is used for the time strictly necessary for transferring the objects from one station to another. The handling robot 20 is released immediately after the transfer of an object, without having to wait for the time necessary for the various steps for preparing the intravenous medicaments.

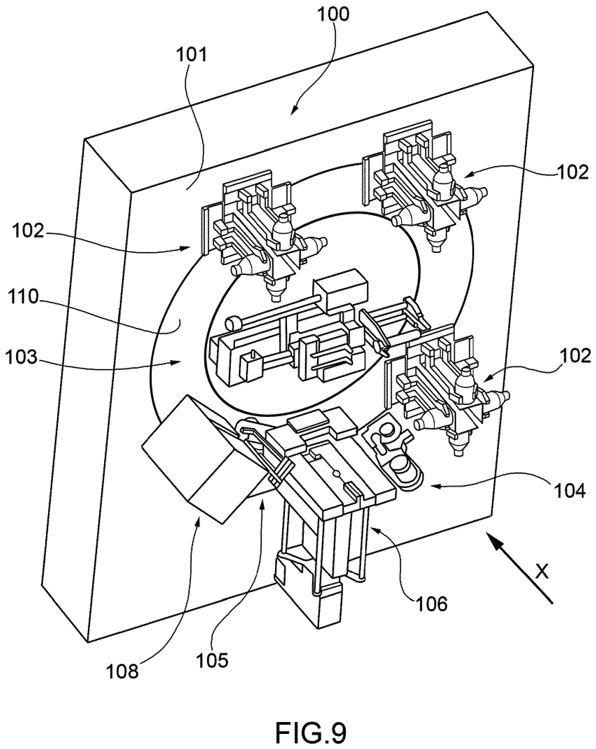

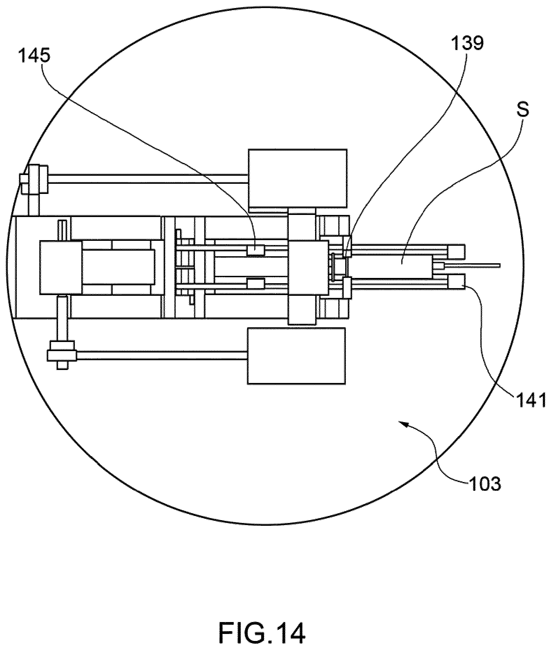

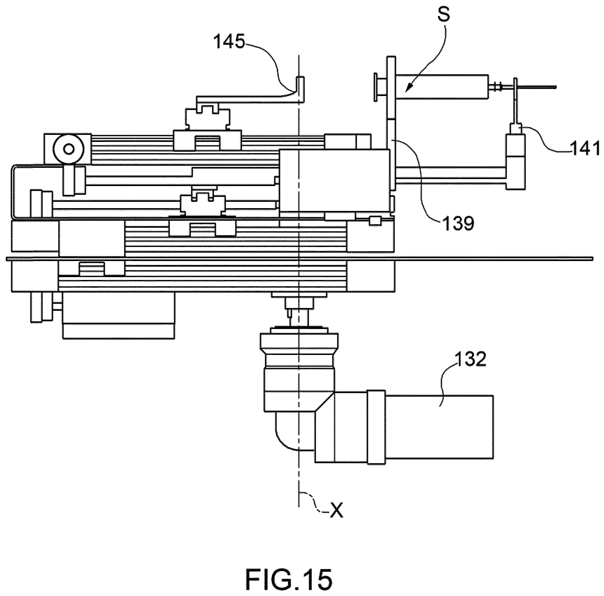

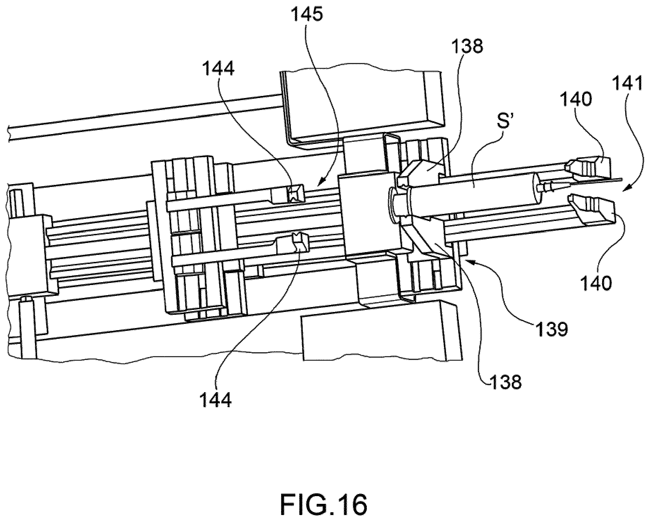

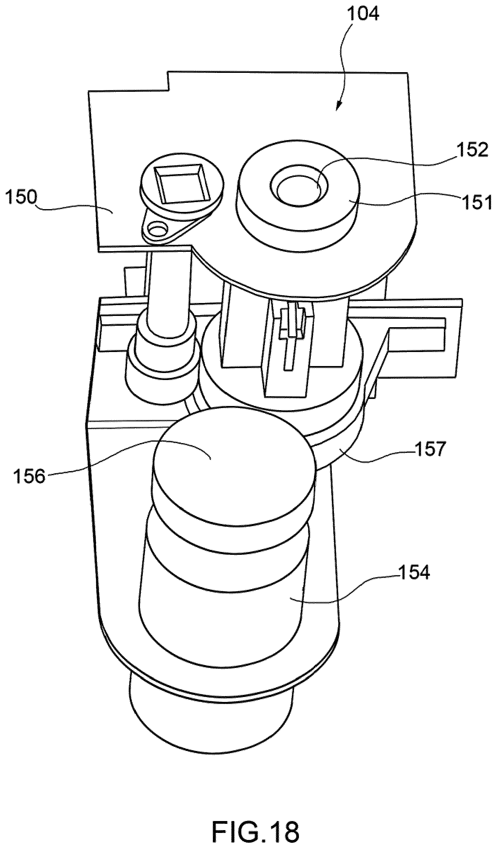

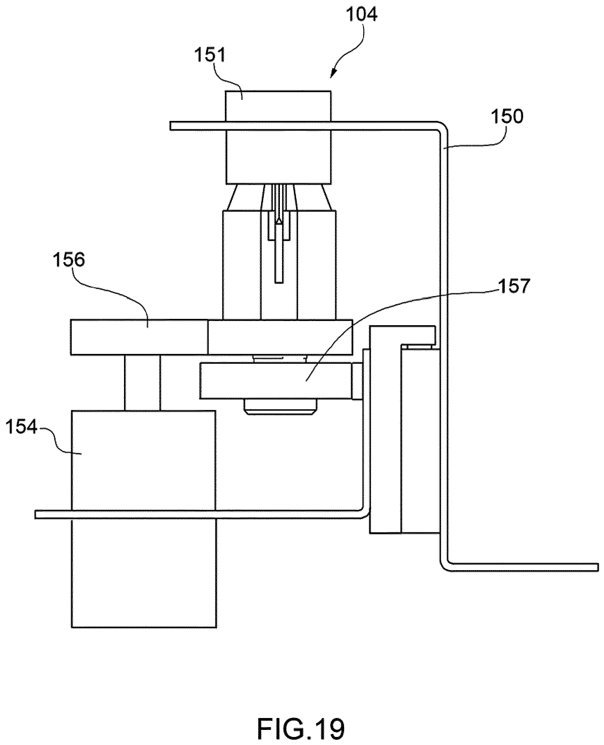

With reference now to Figures 9 to 23, there is described in detail a metering module 100 which can be used to form one of the internal walls of the machine described above. The metering module 100 can also be used alone, for example, by providing it inside a laminar flow cabinet so as to be able to be used by an operator without using the handling robot 20 described above.

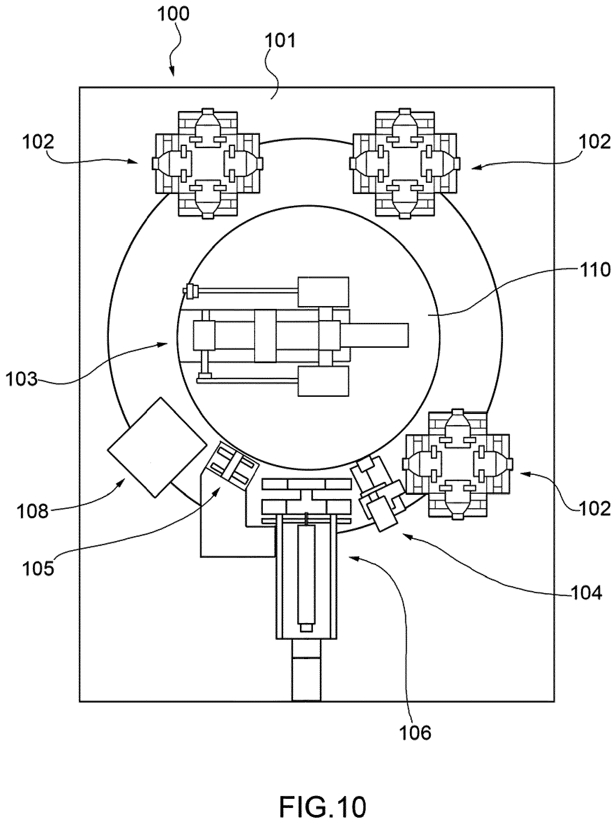

With reference to Figures 9 and 10, a metering module 100 comprises an equipped wall 101 which contains the movement members and the electronics for actuating different groups which protrude therefrom. The metering module 100 comprises one or more container support groups 102. The metering module 100 preferably comprises a syringe support/metering member group 103 even if the use of a plurality of syringe support/metering member groups 103 is not excluded. The metering module comprises a needle unscrewing and/or syringe plugging group 104, even if the use of a plurality of needle unscrewing and/or syringe plugging groups 104 is not excluded. The metering module comprises a syringe weighing group 105 even if the use of a plurality of syringe weighing groups 105 is not excluded. The metering module comprises a bag weighing group 106 even if the use of a plurality of bag weighing groups 106 is not excluded. There can also be mounted on the equipped wall a washing station 108 for the needles and the pairs of needle-holding pincers of the metering support.

In the embodiment illustrated in Figures 9 and 10, the metering module 100 comprises a single syringe support/metering member group 103 which is arranged on the equipped wall 101 in a substantially central position. Some container support groups 102 (three in the example of the Figures), a needle unscrewing and/or syringe plugging group 104, a syringe weighing group 105 and - in a lower position - a bag weighing group 106 are arranged around the syringe support/metering member group in a substantially radial arrangement.

The syringe support/metering member group is mounted on a rotary platform 134 which is actuated by a motor group 132 which allows it to rotate in the vertical plane of the equipped wall 101 so as to turn from time to time towards the various groups which radially surround it, as will become clearer from the following detailed description. The main characteristic of the metering module 100 is that all the operations on the objects stored thereon can also be carried out without the intervention of a handling robot or an external operator. In this sense, the metering module 100 constitutes an autonomous operating unit.

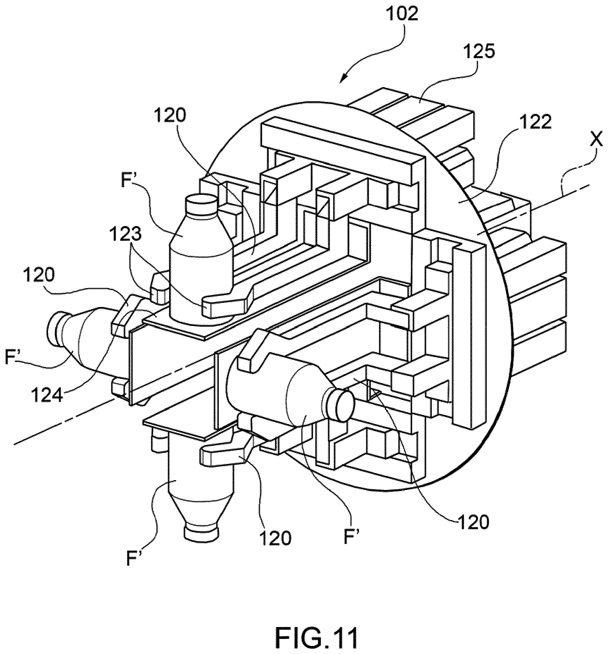

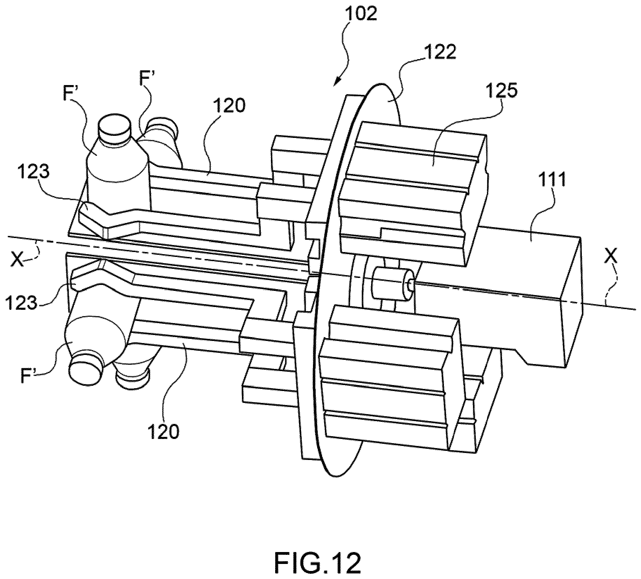

With reference now to Figures 11 and 12, the container support group 102 serves to retain closed containers F' to be used with the metering system. The containers F' may contain both liquids and powders and can therefore be used both for drawing in a substance from the interior thereof and for injecting a substance at the inner side thereof. One and/or other of those two substance extraction or injection functions can be repeated several times on the same container F', independently of the positioning of the container F' on the container support group 102 and the installation location of the module with respect to the metering unit. The containers F' are generally closed containers which can contain a liquid or powder and can be both rigid (for example, bottles, small bottles, ampoules) and flexible (for example, bags, elastomeric pumps), which are formed by a plurality of materials (for example, glass + plastics material, different plastics materials) or by a single material (for example, glass or plastics material).

The container support group 102 comprises a series of pairs of pincers 120 which project from the equipped wall 101. The pairs of pincers 120 are arranged around a substantially horizontal axis X-X of a rotary member 122. Preferably, each container support group 102 comprises four pairs of pincers 120 which are arranged at 90°. Each pair of pincers 120 comprises two jaws 123 which are capable of gripping a container F'. There is arranged under all the jaws 123 a support plate 124 for the container F'. The jaws 123 are actuated by an actuator mechanism 125. Each container support group 102 can therefore support a plurality of containers F' at the same time. As a result of the rotary member 122, the container support group 102 can rotate by means of the motor group 111 in order to position a container F' beside the syringe support/metering member group 103. The pairs of pincers 120 can work autonomously and in any position to allow them to be charged with a container F' while at the same time another pair of pincers 120 is used in the metering zone.

It is possible to use the container support group 102 in such a manner that the containers F' which can no longer be used are allowed to fall simply by opening the respective pairs of pincers 120. To this end, there is provided below the container support group a basket or the like for collecting the containers F' which are allowed to fall from the container support group 102. The container support group 102 is autonomous per se and can be constructed so as to be able to be disengaged from the equipped wall 101 so as to be carried en bloc towards a new position. For example, the container support group 102 could be disengaged and carried towards a separate charging position so as to charge the entire system externally with respect to the metering module 100. In a variant, the pairs of pincers 120 can be autonomously disengaged from the container support group 102 so as to be carried independently to a charging position, leaving the motor member of the container support group 102 in position on the equipped wall 101.

Various positions of the container support group 102 which are defined by different rotation angles about the axis X-X can be associated with different functionalities. For example, it is possible to have a container charging position, a container discharge position, an injection and/or drawing-in position, a weighing position, a disinfection position, a bar code and/or label reading position and a container opening position (for example, if the container is an ampoule).

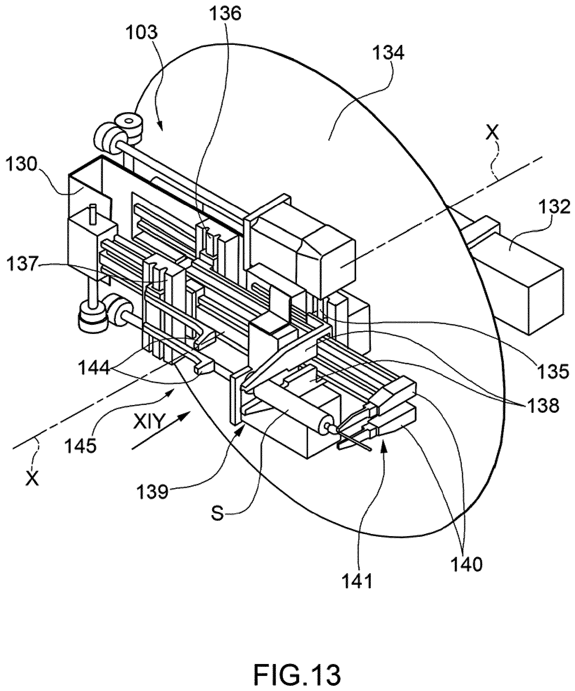

With reference now to Figures 13 to 16, the syringe support/metering member group 103 serves to support syringes S or the like in order to carry out the metering operations. In particular, it serves to retain and use the syringes S and the like and to transport them towards various positions inside the metering module 100 where various functions are carried out, such as liquids being drawn in or injected, weighing, washing, identification and evaluation of the weight and/or other characteristics, for example, by means of vision systems such as tele-cameras and the like, the closure of the metering objects, connection and/or disconnection of needles or other external systems (for example, bags, elastomeric pumps, connection tubes, etc.), and in general all the functions which can be carried out on the objects for metering such as the syringes S or the like.

The syringe support/metering member group 103 comprises a base support 130 which can rotate about an axis X-X and which is connected to a main rotation motor 132 which is arranged behind a circular plate 134 which defines a portion of the plane of the equipped wall 101. In this manner, the main rotation motor 132 remains arranged inside the equipped wall 101 while the base support 130 projects outside it. All the base support 130 may optionally move in translation along a transverse axis with respect to the axis X-X as a result of a transverse movement system.

There is mounted on the base support a linear syringe body runner 135, a linear syringe needle runner 136 and a linear syringe plunger clamping runner 137, each one being capable of sliding on a respective linear guide and being controlled by a transmission operated by a relevant motor.

There are mounted in a movable manner on the linear syringe body runner 135 two jaws 138 of a pair of syringe body clamping pincers 139. The two jaws 138 can be opened and closed about the body of a syringe S or the like, preferably being brought into abutment with the wings of the syringe S opposite the receiving member of the needle.

There are mounted in a movable manner on the linear syringe needle runner 136 two jaws 140 of a pair of syringe needle clamping pincers 141. The two jaws 140 can be opened and closed about the needle support of the syringe S in order to insert it or remove it. The pair of syringe needle clamping pincers 141 is capable of controlling both syringes S with clamping of the needle of the Luer Lock type and other types of clamping, for example, "Luer Slip Tip", "Eccentric Luer Slip Tip", "Catheter Tip" and in general all the connections between syringes and needles based on press-fitting in addition to models with screw type fitting, such as the ones provided with a Luer Lock system and the like. The pair of syringe needle clamping pincers 141 can carry out centring of the needle with the injection and/or drawing tip by means of an autonomous movement with respect to the rest of the metering system. The pair of syringe needle clamping pincers 141 can keep the needle in contact with the syringe S in order to allow the use of types of connection with pressure between the needle/syringe. As a result of the linear runner 136, the pair of syringe needle clamping pincers 141 can allow the needle to be removed from the syringe S by means of a longitudinal movement with respect to the axis of the syringe. The pair of syringe needle clamping pincers 141 can also carry out the removal of the needle covering cap. The pair of syringe needle clamping pincers 141 can be completely withdrawn in order to allow the body of the syringe to be completely free and therefore to afford the possibility of manipulating the syringe in other sub-units, such as, for example, weighing the syringe without it being necessary for the robot arm to intervene, or to temporarily park the syringe inside the system. The pair of pincers 141 can be extended beyond the limit of the needle in order to be able to be washed inside the washing unit 108 so as to prevent any problems of cross-contamination of the medicaments.

There are mounted in a movable manner on the linear syringe plunger clamping runner 137 two jaws 144 of a pair of syringe plunger clamping pincers 145. The two jaws 144 can be opened and closed about the rod of a syringe plunger S in order to extract it from and insert it in the syringe S in order to operate in accordance with drawing in and injection.

The syringe support/metering member group 103 is capable of being moved in rotation about the axis X-X as a result of the motor 132. The syringe S can further carry out translation movements in accordance with an axis perpendicular to the axis X-X mainly as a result of the capacity for linear movement of the pair of syringe body clamping pincers 139 which is mounted on the linear runner 134. It is thereby possible to operate on any points over the periphery of the syringe support/metering member group 103 without any need for provision of predetermined mechanical blocks or stops.

The characteristics of the syringe support/metering member group 103 allow the use of syringes S having different dimensions without, however, being limited to a single format or single mark. The settings in relation to the various syringes S are saved inside a database of the electronic processing system and afford the capacity for modifying the operating configuration when changing the syringe and/or needle.

It is possible to configure the syringe support/metering member group 103 so as to allow the syringe to fall after it has been used. To that end, it is possible to provide a basket or the like below the syringe support/metering member group 103. This prevents the use of the handling robot for unloading the syringe which can thereby be carried out automatically.

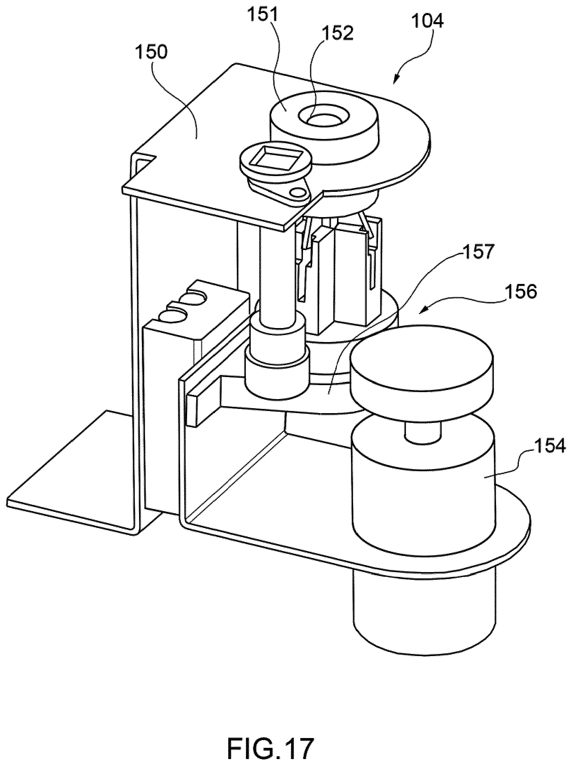

With reference now to Figures 17 to 19, a needle unscrewing and/or syringe plugging group 104 allows rotation and/or retention of objects such as needles or covers for syringes. This group comprises a main member 150 on which there is mounted an operating member 151 which has a receiving member 152 for receiving and gripping a member, for example, a syringe needle or a syringe cover. A motor 154 is connected with a transmission 156 to the operating member 151 so as to rotate it selectively with control. There is associated with the operating member 151 a translation member 157, for example, a plunger, for pressing the cover on the syringe S or withdrawing the needle from the syringe S.

The group 104 is capable of unscrewing the needles connected with or without a Luer Lock system. The group 104 is capable of covering the syringes with covers both under pressure and in a screwable manner. All the materials retained by the group 104 can be caused to fall automatically, for example, into a basket or the like underneath, so as not to require the intervention of the robot arm.

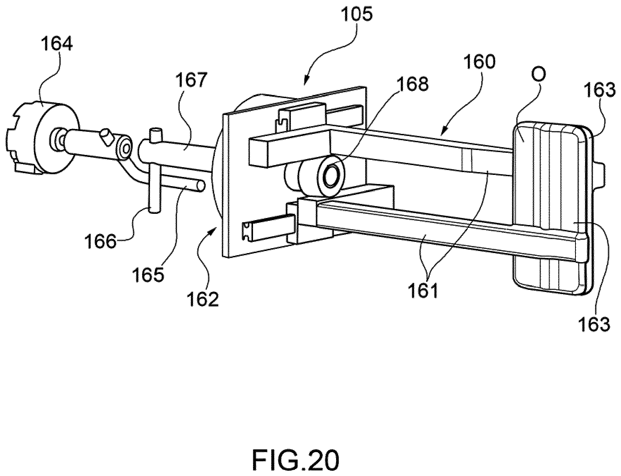

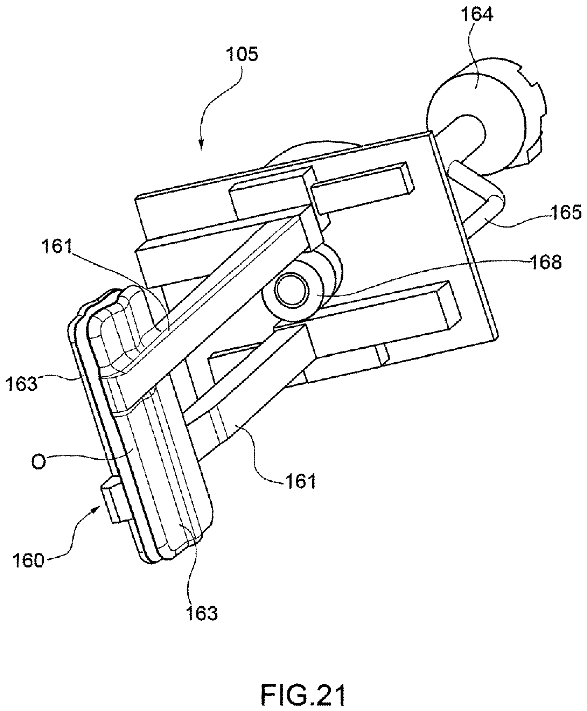

With reference now to Figures 20 and 21, the syringe weighing group 105 comprises an engaging element 160. The engaging element 160 preferably comprises two arms 161 which are capable of gripping a syringe S or other object to be weighed by retaining it between two jaws 163 so that it is secured only to a balance 162. The two arms 161 are loaded by a spring which urges each of them in the direction of the other. A motor 164 is connected to an eccentric arm 165 which acts only at one side of a radial peg 166 which is fixed to a shaft 167 provided with a transmission 168 which by rotating moves the arms 161 away by acting counter to the action of the spring. When the syringe weighing group 105 is in a waiting position, the motor 164 urges the eccentric arm 165 against the radial peg 166 in such a manner that the arms 161 remain remote from each other by acting counter to the action of the spring. In order to weigh an object O, for example, a syringe, the object O is arranged between the arms 161, the motor 164 is actuated so as to move the eccentric arm 165 away from the radial peg 166 and therefore to obtain mechanical isolation between the balance 162 and the motor 164, so as not to affect the measurement.

Naturally, the system for isolating the syringe weighing group 105 can also be constructed differently from the one illustrated. The group 105 is in any case used in order to retain the syringe or another object, such as bags, bottles, ampoules, needles, covers and elastomer bags, allowing them to be weighed without the intervention of the robot arm or an external operator. As indicated in the specific example of the Figures, the automatic closure system of the engaging element 160 can be actuated by a spring which stores energy as a result of the closure thereof, while the opening is carried out by means of a motor or external rotation which loads the spring and keeps the engaging element 160 open. The motor could be of the electrical type, supplied by a battery and controlled in a wireless manner. The motor could be of the electrical type, supplied and controlled by means of an electrical field nearby. An alternative actuation system could use the accumulation of a pressurized fluid.

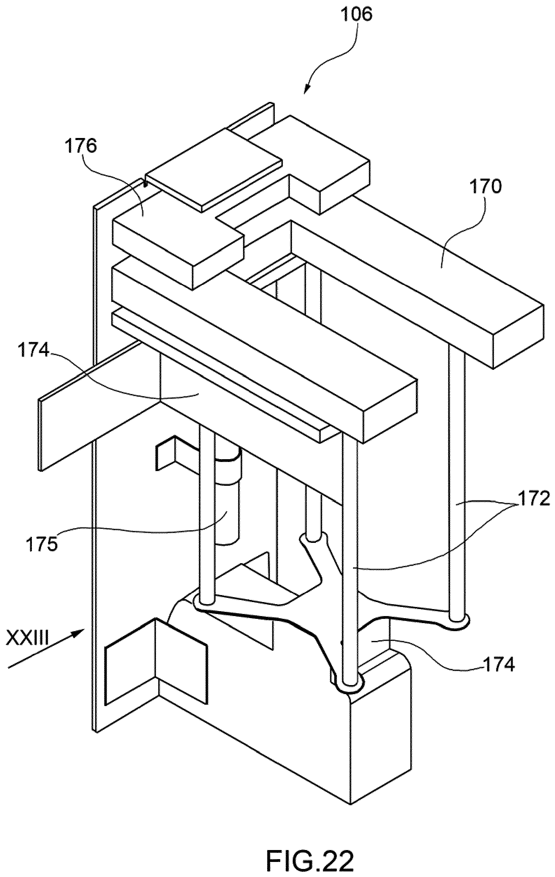

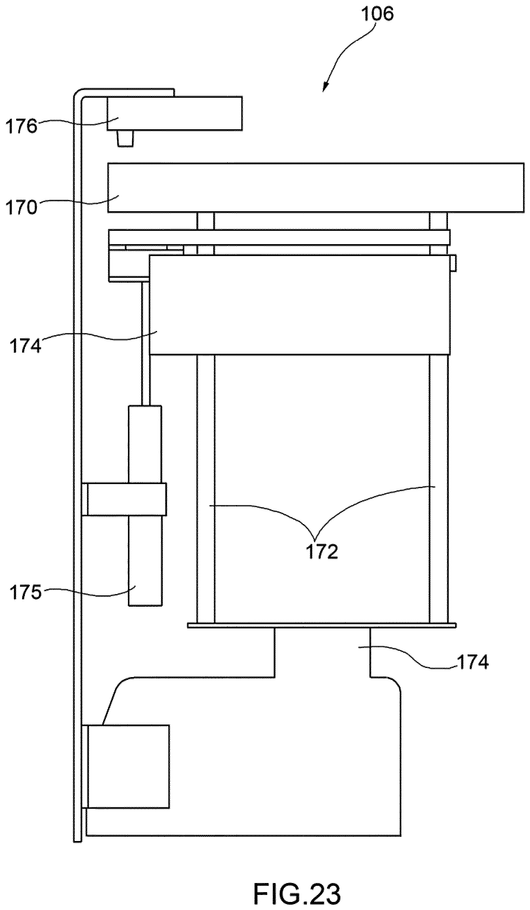

With reference now to Figures 22 and 23, the bag weighing group 106 comprises a bag support 170 which is supported by small arms 172 of a balance 174. There is arranged under the bag support 170 a lifting member 174 which is actuated by a piston 175. The lifting member can press the bag support 170 against an upper projection 176 which acts as an abutment and as a fixed reference. The bag (or other object) which is retained by the bag support 170 can move in translation between two positions. In the first weighing position, the lifting member 174 is lowered and does not interfere with or engage with the bag support 170. In this manner, the bag support 170 is supported only by the arms 172 and therefore completely urges the balance 174. In the weighing position, the bag support 170 is therefore free so that only gravitational force secures it to the balance so as to establish the weight of the object present on the balance apart from a known deviation. In the second stationary position, the lifting member 174 presses the bag support 170 upwards into abutment against the upper projection 176. The movement between the two positions is carried out with a single movement, without any use of a handling robot.

The metering module 100 can also operate autonomously, that is to say, substantially without any need for a robot, for the semi-manual production of the admixtures of medicaments. To that end, the metering module 100 can be, for example, inserted in a laminar flow cabinet and used to automate all the operations which are usually carried out by an operator. In this case, the only task left for the operator is to load the various objects used by the metering module 100, such as syringes, bags, bottles, covers, etc. Once those objects have been loaded, the metering module 100 can carry out the preparation of the medicaments without it being necessary for any other action by the operator. In this manner, there is ensured for the process greater accuracy with respect to manual preparation in a manner similar to what can be carried out with a completely automatic composition by means of the machine which is described above and which is provided with a robot arm.

The metering module 100 has flexible operation which may be adapted to preparations of various types. Consequently, there is described by way of example only one of those processes which can be carried out by means of the metering module 100. A process can, for example, start with loading a syringe S on the metering system. The metering module 100 can then autonomously provide for alignment of the syringe S and the needle in order to provide for the use thereof. For example, it is possible to control the removal of the cover of the needle and/or the insertion of the needle into the syringe S. During the step of arranging the syringe S for use, it is possible to carry out loading of the bottles F' or other objects. The loading process can therefore be carried out at the same time on the same metering module 100. Typically, the bags in which the final product can be injected are loaded on the metering member last, even if this must not be considered to limit the operational and functional possibilities of the metering module 100. During the loading step, that is to say, once the step of loading all the objects has been completely finished, the metering module 100 starts to take the liquids and the medicaments from bags, bottles, ampoules and any other object which might have been loaded. Once the liquid has been drawn in and optionally the weight of the syringe S has been controlled in an automatic manner by means of the syringe weighing group 105, the metering module 100 provides for injecting the liquid into the final recipient container. This final container can in turn be weighed in order to evaluate whether the quantity of liquid injected is correct. The final container may be a bag, a syringe, a bottle or another object which is capable of maintaining a liquid therein.

Finally, the machine, the module and the process of the present invention allow the production of intravenous medicaments with a great rapidity of execution. The typical execution rapidity of a single metering member may be increased in a modular manner with the equipped walls which are provided with the equipment suitable for autonomously carrying out the necessary operations being increased, in an asynchronous manner with respect to the movements of a handling robot used only for the transport of the objects from one position to the other inside the machine.

Naturally, the principle of the invention remaining the same, the forms of embodiment and details of construction may be varied widely with respect to those described and illustrated, without thereby departing from the scope of the present invention.

## Claims

1. A machine for preparing intravenous medicaments comprising an enclosing structure (11) having a plurality of lateral walls which define the sides of a closed internal working environment, at least one access station (12) being provided on at least one lateral wall of the enclosing structure (11) for the selective access to the closed internal working environment, at least one wall of the lateral walls being an equipped wall (22) which groups together the machinery which is provided for preparing the intravenous medicaments, each of the at least one equipped wall being provided with a plurality of stations for one or more objects (F, A, B, S) which can be used in the preparation of intravenous medicaments, the plurality of stations comprising:
- at least one temporary receiving or parking station (26, 27, 28, 30) which is provided for temporarily receiving one or more of the objects (F, A, B, S), and
- at least one operating station (31, 34, 42), distinct from the at least one temporary receiving or parking station (26, 27, 28, 30), which is provided for carrying out operations on one or more of the objects (F, A, B, S) for preparing intravenous medicaments,
wherein said at least one temporary receiving or parking station (26, 27, 28, 30) and said at least one operating station (31, 34, 42) are provided on each of the at least one equipped wall (24) of the lateral walls, the machine further comprising a handling robot (20) which is arranged in the closed internal space of the machine, the handling robot (20) being programmed to transfer the objects (F, A, B, S) from any station which is selected from at least one access station (12), at least one temporary receiving station (26, 27, 28, 30) and at least one operating station (31, 34, 42), to any other of those stations (12, 26, 27, 28, 30, 31, 34, 42), wherein there is provided in a substantially central zone of the at least one equipped wall (24,101) a preparation station (32), comprising a syringe support (40), which support is provided with an engaging member (42) for a syringe (S), and wherein the syringe support (40) comprises a syringe actuator (44) which is capable of selectively moving forwards or backwards the plunger of a syringe (S) gripped by the engaging member (42) so as to operate the syringe (S) in a drawing or injecting manner, the syringe support being mounted on a rotary platform (134) which is actuated by a motor group (132) which allows it to rotate in the vertical plane of the at least one equipped wall (24,101) so as to turn from time to time towards various groups which radially surround it and wherein all the operations on the objects stored on the at least one equipped wall (24,101) can be carried out without the intervention of the handling robot or an external operator.

2. A machine according to claim 1, wherein the handling robot (20) is arranged in a substantially central position in the closed internal working environment, the handling robot (20) comprising a handling hand (23) and being able to rotate about a substantially vertical axis so as to be able substantially to reach with the handling hand (23) any position on the lateral walls of the enclosing structure (11) .

3. A machine according to either claim 1 or claim 2, wherein the at least one equipped wall (24) comprises:
- at least one bottle parking station (26) for bottles (F) or the like,
- at least one ampoule parking station (27) for ampoules or phials (A) or the like,
- at least one syringe parking station (28) for syringes (S) or the like,
- at least one bag parking station (30) for bags (B) or the like.

4. A machine according to any one of claims 1 to 3, wherein bottle work supports (31) are arranged around the preparation station (32), and wherein more preferably there is arranged below the preparation station (32) a weighing device (33) which is capable of weighing a bag (B) and/or a bottle (F), and wherein even more preferably the syringe support (40) can rotate about an axis which is substantially horizontal and movable in a substantially vertical direction,.

5. A machine according to any one of the preceding claims, wherein there are arranged on the at least one equipped wall (24) one or more mixers (34) which are capable of mixing the contents of one or more corresponding bottles (F).

6. A machine according to any one of the preceding claims, wherein the access station (12) is constructed in the form of a transit chamber which is constructed so as not to directly expose to the exterior the environment internal with respect to the machine, and wherein preferably the transit chamber has two closure panels or doors, one directed towards the outer side of the enclosing structure (11) so as to be accessible to an operator in order to introduce or withdraw contents to/from the transit chamber, and the other directed towards the internal working environment of the machine for removing or depositing contents by the handling robot (20).

7. A machine according to any one of the preceding claims, wherein there can be inserted in the access station (12) at least one tray (17) which is provided with specific receiving members (18) for the objects (F, A, B, S) which are suitable for preparing the intravenous medicaments, and wherein preferably the at least one tray (17) comprises at least one receiving member (18) which comprises a cavity with at least two mutually different internal diameters so as to be able to receive cylindrical objects with corresponding different basic diameters which substantially correspond to the different internal diameters of the cavity, and wherein more preferably the at least one tray (17) further has at least one specific receiving member (19) for syringes (S) or the like.

8. A machine according to any one of the preceding claims, provided with a system for regulating the air inside the enclosing structure (11) in order to maintain environmental conditions which are ideal for preparing the intravenous medicaments, at the same time preventing discharges of powders or other products which are dangerous to the health of the operators, or minimizing the introduction of contaminants in the enclosing structure (11), and wherein preferably the internal working environment is maintained at a negative pressure in order to prevent the discharge of noxious or toxic products being processed therein, or wherein alternatively preferably the internal working environment is maintained at a positive pressure in order to prevent the introduction of contaminants into the enclosing structure (11) .

9. A machine according to any one of the preceding claims comprising a metering module for preparing intravenous medicaments forming at least one of the lateral, equipped walls the machine, the metering module comprising one or more container support groups (102), at least one syringe support/metering member group (103), distinct from the one or more container support groups (102), and at least one weighing group (105, 106) for weighing objects used in the preparation of intravenous medicaments.

10. A machine according to claim 9, wherein the metering module further comprises at least one needle unscrewing and/or syringe plugging group (104).

11. A machine according to claim 9 or 10, wherein the metering module further comprises at least one washing station (108).

12. A machine according to any one of claims 9 to 11, wherein the weighing group (105, 106) comprises at least one syringe weighing group (105) and/or at least one bag weighing group (106).

13. A process for preparing intravenous medicaments by means of a machine of the type indicated in any one of claims 1 to 8, comprising the implementation of the following steps asynchronously:
- introduction of containers (F, A, B, S) inside the machine;
- removal of containers from the machine;
- transfer of containers (F, A, B, S) from a predetermined station to another predetermined station, which is carried out by the single handling robot (20);
- subjecting the containers (F, A, B, S) to operations for preparing intravenous medicaments which are carried out without the use of the handling robot (20) on each of the at least one equipped wall (22).

## Patentansprüche

1. Maschine zur Herstellung intravenöser Medikamente, mit einer umschließenden Struktur (11) mit einer Vielzahl von Seitenwänden, die die Seiten einer geschlossenen inneren Arbeitsumgebung definieren, wobei mindestens eine Zugangsstation (12) an mindestens einer Seitenwand der umschließenden Struktur (11) für den gezielten Zugang zu der geschlossenen inneren Arbeitsumgebung vorgesehen ist, wobei mindestens eine Wand der Seitenwände eine bestückte Wand (22) ist, die die Maschinen zusammenfasst, die für die Herstellung der intravenösen Medikamente vorgesehen sind, wobei jede der mindestens einen bestückten Wand mit einer Vielzahl von Stationen für einen oder mehrere Gegenstände (F, A, B, S) versehen ist, die bei der Herstellung intravenöser Medikamente verwendet werden können, wobei die Vielzahl von Stationen Folgendes umfasst:
- mindestens eine temporäre Aufnahme- oder Parkstation (26, 27, 28, 30), die zur temporären Aufnahme eines oder mehrerer der Gegenstände (F, A, B, S) vorgesehen ist, und
- mindestens eine Bedienstation (31, 34, 42), die sich von der mindestens einen temporären Aufnahme- oder Parkstation (26, 27, 28, 30) unterscheidet und für die Durchführung von Operationen an einem oder mehreren der Gegenstände (F, A, B, S) zur Herstellung intravenöser Medikamente vorgesehen ist,
wobei die mindestens eine temporäre Aufnahme- oder Parkstation (26, 27, 28, 30) und die mindestens eine Bedienstation (31, 34, 42) jeweils an der mindestens einen bestückten Wand (24) der Seitenwände vorgesehen sind, wobei die Maschine ferner einen Handhabungsroboter (20) umfasst, der in dem geschlossenen Innenraum der Maschine angeordnet ist, wobei der Handhabungsroboter (20) so programmiert ist, dass er die Gegenstände (F, A, B, S) von einer beliebigen Station, die aus mindestens einer Zugangsstation (12), mindestens einer temporären Aufnahmestation (26, 27, 28, 30) und mindestens einer Bedienstation (31, 34, 42) ausgewählt ist, zu einer beliebigen anderen dieser Stationen (12, 26, 27, 28, 30, 31, 34, 42) zu überführen, wobei in einem im Wesentlichen zentralen Bereich der mindestens einen bestückten Wand (24, 101) eine Herstellungsstation (32) vorgesehen ist, die eine Spritzenhalterung (40) umfasst, die mit einem Eingriffselement (42) für eine Spritze (S) versehen ist, und wobei die Spritzenhalterung (40) einen Spritzenaktor (44) umfasst, der in der Lage ist, den Kolben einer von dem Eingriffselement (42) ergriffenen Spritze (S) gezielt vorwärts oder rückwärts zu bewegen, um die Spritze (S) in einer ziehenden oder injizierenden Weise zu betreiben, wobei die Spritzenhalterung auf einer Drehplattform (134) montiert ist, die durch eine Motorgruppe (132) betätigt wird, die es ihr erlaubt, sich in der vertikalen Ebene der mindestens einen bestückten Wand (24, 101) zu drehen, um sich von Zeit zu Zeit zu verschiedenen Gruppen hin zu drehen, die sie radial umgeben, und wobei alle Operationen an den auf der mindestens einen bestückten Wand (24, 101) gelagerten Gegenständen ohne das Eingreifen des Handhabungsroboters oder eines externen Bedieners durchgeführt werden können.

2. Maschine nach Anspruch 1, wobei der Handhabungsroboter (20) in einer im Wesentlichen zentralen Position in der geschlossenen inneren Arbeitsumgebung angeordnet ist, wobei der Handhabungsroboter (20) eine Handhabungshand (23) umfasst und in der Lage ist, sich um eine im Wesentlichen vertikale Achse zu drehen, so dass er mit der Handhabungshand (23) im Wesentlichen jede Position an den Seitenwänden der umschließenden Struktur (11) erreichen kann.

3. Maschine nach Anspruch 1 oder Anspruch 2, wobei die mindestens eine bestückte Wand (24) Folgendes umfasst:
- mindestens eine Flaschenparkstation (26) für Flaschen (F) oder dergleichen,
- mindestens eine Ampullenparkstation (27) für Ampullen oder Fläschchen (A) oder dergleichen,
- mindestens eine Spritzenparkstation (28) für Spritzen (S) oder dergleichen,
- mindestens eine Beutelparkstation (30) für Beutel (B) oder dergleichen.

4. Maschine nach einem der Ansprüche 1 bis 3, wobei um die Herstellungsstation (32) Flaschenarbeitsträger (31) angeordnet sind, und wobei mehr bevorzugt unterhalb der Herstellungsstation (32) eine Wiegevorrichtung (33) angeordnet ist, die in der Lage ist, einen Beutel (B) und/oder eine Flasche (F) zu wiegen, und wobei noch mehr bevorzugt die Spritzenhalterung (40) sich um eine im Wesentlichen horizontale Achse drehen kann und in einer im Wesentlichen vertikalen Richtung bewegbar ist.

5. Maschine nach einem der vorhergehenden Ansprüche, wobei an der mindestens einen bestückten Wand (24) ein oder mehrere Mischer (34) angeordnet sind, die in der Lage sind, den Inhalt einer oder mehrerer entsprechender Flaschen (F) zu mischen.

6. Maschine nach einem der vorhergehenden Ansprüche, wobei die Zugangsstation (12) in Form einer Durchgangskammer ausgebildet ist, die so konstruiert ist, dass sie die Umgebung im Inneren der Maschine nicht direkt nach außen hin freilegt, und wobei die Durchgangskammer vorzugsweise zwei Verschlussplatten oder -türen aufweist, von denen eine zur Außenseite der umschließenden Struktur (11) gerichtet ist, so dass sie für einen Bediener zugänglich ist, um Inhalte in die Durchgangskammer einzuleiten oder aus ihr zu entnehmen, und die andere zu der inneren Arbeitsumgebung der Maschine gerichtet ist, um Inhalte durch den Handhabungsroboter (20) zu entnehmen oder abzulegen.

7. Maschine nach einem der vorhergehenden Ansprüche, wobei in die Zugangsstation (12) mindestens ein Tablett (17) eingesetzt werden kann, das mit speziellen Aufnahmeelementen (18) für die zur Herstellung der intravenösen Medikamente geeigneten Gegenstände (F, A, B, S) versehen ist, und wobei vorzugsweise das mindestens eine Tablett (17) mindestens ein Aufnahmeelement (18) umfasst, das einen Hohlraum mit mindestens zwei voneinander verschiedenen Innendurchmessern umfasst, um zylindrische Gegenstände mit entsprechend unterschiedlichen Grunddurchmessern aufnehmen zu können, die im Wesentlichen den verschiedenen Innendurchmessern des Hohlraums entsprechen, und wobei mehr bevorzugt das mindestens eine Tablett (17) ferner mindestens ein spezielles Aufnahmeelement (19) für Spritzen (S) oder dergleichen besitzt.

8. Maschine nach einem der vorhergehenden Ansprüche, versehen mit einem System zur Regulierung der Luft im Inneren der umschließenden Struktur (11), um Umgebungsbedingungen aufrechtzuerhalten, die für die Herstellung der intravenösen Medikamente ideal sind, wobei gleichzeitig der Austritt von Pulvern oder anderen Produkten verhindert wird, die für die Gesundheit des Bedienpersonals gefährlich sind, oder die Einleitung von Verunreinigungen in die umschließende Struktur (11) minimiert wird, und wobei vorzugsweise die innere Arbeitsumgebung auf einem Unterdruck gehalten wird, um den Austritt von schädlichen oder toxischen Produkten, die darin verarbeitet werden, zu verhindern, oder wobei alternativ vorzugsweise die innere Arbeitsumgebung auf einem Überdruck gehalten wird, um die Einleitung von Verunreinigungen in die umschließende Struktur (11) zu verhindern.

9. Maschine nach einem der vorhergehenden Ansprüche, mit einem Dosiermodul zur Herstellung intravenöser Medikamente, das mindestens eine der bestückten Seitenwände der Maschine bildet, wobei das Dosiermodul eine oder mehrere Behälterträgergruppen (102), mindestens eine von der einen oder den mehreren Behälterträgergruppen (102) verschiedene Spritzenträger-/Dosierelementgruppe (103) und mindestens eine Wiegegruppe (105, 106) zum Wiegen von bei der Herstellung intravenöser Medikamente verwendeten Gegenständen umfasst.

10. Maschine nach Anspruch 9, wobei das Dosiermodul ferner mindestens eine Nadelabschraub- und/oder Spritzeneinsteckgruppe (104) umfasst.

11. Maschine nach Anspruch 9 oder 10, wobei das Dosiermodul ferner mindestens eine Waschstation (108) umfasst.

12. Maschine nach einem der Ansprüche 9 bis 11, wobei die Wiegegruppe (105, 106) mindestens eine Spritzenwiegegruppe (105) und/oder mindestens eine Beutelwiegegruppe (106) umfasst.

13. Verfahren zur Herstellung intravenöser Medikamente mit Hilfe einer Maschine des in einem der Ansprüche 1 bis 8 angegebenen Typs, bei dem die folgenden Schritte asynchron durchgeführt werden:
- Einführen der Behälter (F, A, B, S) in die Maschine;
- Entnahme der Behälter aus der Maschine;
- Überführen von Behältern (F, A, B, S) von einer vorbestimmten Station zu einer anderen vorbestimmten Station, was von dem einzelnen Handhabungsroboter (20) durchgeführt wird;
- Unterziehen der Behälter (F, A, B, S) Vorgängen zur Herstellung intravenöser Medikamente, die ohne den Einsatz des Handhabungsroboters (20) jeweils an der mindestens einen bestückten Wand (22) durchgeführt werden.

## Revendications

1. Machine pour préparer des médicaments intraveineux comprenant une structure d'enveloppement (11) ayant une pluralité de parois latérales qui définissent les côtés d'un environnement de travail interne clos, au moins une station d'accès (12) étant fournie sur au moins une paroi latérale de la structure d'enveloppement (11) pour l'accès sélectif à l'environnement de travail interne clos, au moins une paroi des parois latérales étant une paroi équipée (22) qui regroupe la machinerie qui est fournie pour préparer les médicaments intraveineux, chacune de la au moins une paroi équipée étant prévue avec une pluralité de stations pour un ou plusieurs objets (F, A, B, S) qui peuvent être utilisés dans la préparation des médicaments intraveineux, la pluralité de stations comprenant :
au moins une station de réception ou de stationnement temporaire (26, 27, 28, 30) qui est fournie pour recevoir de manière temporaire un ou plusieurs objets (F, A, B, S), et
au moins une station opérationnelle (31, 34, 42), distincte de la au moins une station de réception ou de stationnement temporaire (26, 27, 28, 30), qui est fournie pour réaliser des opérations sur un ou plusieurs objets (F, A, B, S) pour préparer des médicaments intraveineux,
dans laquelle ladite au moins une station de réception ou stationnement temporaire (26, 27, 28, 30) et ladite au moins une station opérationnelle (31, 34, 42) sont fournies sur chacune de la au moins une paroi équipée (24) des parois latérales, la machine comprenant en outre un robot de manipulation (20) qui est agencé dans l'espace interne clos de la machine, le robot de manipulation (20) étant programmé pour transférer les objets (F, A, B, S) de n'importe quelle station qui est sélectionnée parmi au moins une station d'accès (12), au moins une station de réception temporaire (26, 27, 28, 30) et au moins une station opérationnelle (31, 34, 42), à n'importe quelle autre de ces stations (12, 26, 27, 28, 30, 31, 34, 42), dans laquelle il est fourni, dans une zone substantiellement centrale de la au moins une paroi équipée (24, 101), une station de préparation (32), comprenant un support de seringue (40), lequel support est prévu avec un élément de mise en prise (42) pour une seringue (S) et dans laquelle le support de seringue (40) comprend un actionneur de seringue (44) qui est capable de déplacer sélectivement vers l'avant ou l'arrière le piston plongeur d'une seringue (S) saisie par l'élément de mise en prise (42) afin d'actionner la seringue (S) pour l'aspiration ou l'injection, le support de seringue étant monté sur une plateforme rotative (134) qui est actionnée par un groupe moteur (132) qui lui permet de tourner dans le plan vertical de la au moins une paroi équipée (24, 101) afin de tourner de temps en temps vers différents groupes qui l'entourent radialement et dans laquelle toutes les opérations sur les objets stockés sur la au moins une paroi équipée (24, 101) peuvent être réalisées sans l'intervention du robot de manipulation ou d'un opérateur externe.

2. Machine selon la revendication 1, dans laquelle le robot de manipulation (20) est agencé dans une position substantiellement centrale dans l'environnement de travail interne clos, le robot de manipulation (20) comprenant une main de manipulation (23) et pouvant tourner autour d'un axe substantiellement vertical afin de pouvoir substantiellement atteindre, avec la main de manipulation (23), n'importe quelle position sur les parois latérales de la structure d'enveloppement (11).

3. Machine selon la revendication 1 ou la revendication 2, dans laquelle la au moins une paroi équipée (24) comprend :
au moins une station de stationnement de flacons (26) pour des flacons (F) ou similaires,
au moins une station de stationnement d'ampoules (27) pour des ampoules ou des fioles (A) ou similaires,
au moins une station de stationnement de seringues (28) pour des seringues (S) ou similaires,
au moins une station de stationnement de sachets (30) pour des sachets (B) ou similaires.

4. Machine selon l'une quelconque des revendications 1 à 3, dans laquelle les supports de travail de flacon (31) sont agencés autour de la station de préparation (32), et dans laquelle plus préférentiellement il est agencé au-dessous de la station de préparation (32), un dispositif de pesée (33) qui peut peser un sachet (B) et/ou un flacon (F), et dans laquelle encore plus préférentiellement, le support de seringue (40) peut tourner autour d'un axe qui est substantiellement horizontal et mobile dans une direction substantiellement verticale.

5. Machine selon l'une quelconque des revendications précédentes, dans laquelle il est agencé sur la au moins une paroi équipée (24), un ou plusieurs mélangeurs (34) qui sont capables de mélanger le contenu des un ou plusieurs flacons (F) correspondants.

6. Machine selon l'une quelconque des revendications précédentes, dans laquelle la station d'accès (12) est construite sous la forme d'une chambre de transit qui est construite afin de ne pas exposer directement à l'extérieur, l'environnement interne par rapport à la machine, et dans laquelle de préférence la chambre de transit a deux panneaux ou portes de fermeture, une dirigée vers le côté externe de la structure d'enveloppement (11) afin d'être accessible par un opérateur pour introduire ou retirer le contenu dans/de la chambre de transit, et l'autre dirigée vers l'environnement de travail interne de la machine pour retirer ou déposer le contenu par le robot de manipulation (20).

7. Machine selon l'une quelconque des revendications précédentes, dans laquelle il peut être inséré, dans la station d'accès (12), au moins un plateau (17) qui est fourni avec des éléments de réception (18) spécifiques pour les objets (F, A, B, S) qui sont adaptés pour préparer les médicaments intraveineux, et dans laquelle de préférence au moins un plateau (17) comprend au moins un élément de réception (18) qui comprend une cavité avec au moins deux diamètres internes mutuellement différents afin de pouvoir recevoir des objets cylindriques avec différents diamètres de base correspondants qui correspondent substantiellement aux diamètres internes différents de la cavité, et dans laquelle plus préférentiellement le au moins un plateau (17) a en outre au moins un élément de réception spécifique (19) pour seringues (S) ou similaires.

8. Machine selon l'une quelconque des revendications précédentes, founie avec un système pour réguler l'air à l'intérieur de la structure d'enveloppement (11) afin de maintenir des conditions environnementales qui sont idéales pour préparer les médicaments intraveineux, empêchant, en même temps, les décharges de poudres ou d'autres produits qui sont dangereux pour la santé des opérateurs, ou minimisant l'introduction des contaminants dans la structure d'enveloppement (11), et dans laquelle préférentiellement l'environnement de travail interne est maintenu sous une pression négative afin d'empêcher la décharge de produits nocifs ou toxiques qui y sont traités, ou dans laquelle, préférentiellement et de manière alternative, l'environnement de travail interne est maintenu sous une pression positive afin d'empêcher l'introduction de contaminants dans la structure d'enveloppement (11).

9. Machine selon l'une quelconque des revendications précédentes, comprenant un module de dosage pour préparer des médicaments intraveineux formant au moins l'une des parois latérales équipées de la machine, le module de dosage comprenant un ou plusieurs groupes de support de récipient (102), au moins un groupe d'élément de support/dosage de seringue (103), distinct des un ou plusieurs groupes de support de récipient (102), et au moins un groupe de pesée (105, 106) pour peser des objets utilisés dans la préparation des médicaments intraveineux.

10. Machine selon la revendication 9, dans laquelle le module de dosage comprend en outre au moins un groupe de dévissage d'aiguille et/ou de raccordement de seringue (104).

11. Machine selon la revendication 9 ou 10, dans laquelle le module de dosage comprend en outre au moins une station de lavage (108).

12. Machine selon l'une quelconque des revendications 9 à 11, dans laquelle le groupe de pesée (105, 106) comprend au moins un groupe de pesée de seringue (105) et/ou au moins un groupe de pesée de sachet (106).

13. Procédé pour préparer des médicaments intraveineux au moyen d'une machine du type indiqué dans l'une quelconque des revendications 1 à 8, comprenant la mise en œuvre des étapes suivantes de manière asynchrone consistant à :
introduire des récipients (F, A, B, S) à l'intérieur d'une machine ;
retirer des récipients de la machine ;
transférer des récipients (F, A, B, S) d'une station prédéterminée à une autre station prédéterminée, qui est réalisée par le robot de manipulation (20) unique ;
soumettre les récipients (F, A, B, S) aux opérations pour préparer des médicaments intraveineux qui sont réalisées sans l'aide du robot de manipulation (20) sur chacune de la au moins une paroi équipée (22).
